# EUROPÄISCHE PATENTSCHRIFT

(11) **EP 2 257 769 B1**
(45) Veröffentlichungstag und Bekanntmachung des Hinweises auf die Patenterteilung: **07.10.2015**
(21) Anmeldenummer: 08718217.6
(22) Anmeldetag: 26.03.2008
(51) Int. Cl.: G01D 5/20

(54) **INDUKTIVER POSITIONSSENSOR**
INDUCTIVE POSITION SENSOR
CAPTEUR DE POSITION INDUCTIF

(43) Veröffentlichungstag der Anmeldung: 08.12.2010
(73) Patentinhaber: ELMOS Semiconductor AG, 44227 Dortmund (DE)
(72) Erfinder: BRANDS, Robert, 85386 Eching (DE); BÜSSER, Wolfgang, 44227 Dortmund (DE)
(74) Vertreter: Von Kreisler Selting Werner - Partnerschaft von Patentanwälten und Rechtsanwälten mbB
(86) Internationale Anmeldenummer: PCT/EP2008/053544
(87) Internationale Veröffentlichungsnummer: WO 2009/118042

(56) Entgegenhaltungen:
- EP-A- 1 736 736
- WO-A-2004/020936
- WO-A-2007/068765
- US-A1- 2002 041 074
- US-A1- 2005 030 010

## Beschreibung

Die Erfindung betrifft einen induktiven Positionssensor zur Bestimmung der Position eines bewegbaren Elements und insbesondere zur Bestimmung des Drehwinkels eines bewegbaren Elements. Die Erfindung ist aber auch bei einem Linearpositionssensor einsetzbar.

Auf den verschiedensten technischen Gebieten und für die unterschiedlichsten Anwendungszwecke kann es erforderlich sein, die Position von sich bewegenden Elementen oder Teilen einer Komponente messtechnisch zu erfassen. Als Beispiel für einen Anwendungsfall eines induktiven Drehwinkelsensors sei im Automotive-Bereich die Detektion der Gaspedalstellung, der Drosselklappenstellung, des Tankfüllstandes oder des Fahrzeughochstandes (Einfederung des Fahrzeuges) genannt. Der Vorteil induktiver Sensorsysteme besteht in der berührungslosen Erfassung einer Weg- oder Drehposition.

Die Erfindung betrifft speziell induktive Positionssensoren, wie beispielhaft und schematisch in Fig. 1 und z.B. WO-A-2004/072653, WO-A-2003/067181 und WO-A-2007/068765 beschrieben. In der nachfolgend beschriebenen Fig. 1 ist ein Ein-Kanal-Induktiv-Positionssensor als Drehwinkelsensor dargestellt.

Der Sensor 10 weist zwei Sendeeinheiten 12,14 in Form von Sendespulen auf, von denen jede ein elektromagnetisches Wechselfeld erzeugt, welches eine ortsabhängige Amplitude aufweist. Die beiden Sendeeinheiten 12,14 werden von einer Ansteuereinheit 16 angesteuert, was weiter unten noch beschreiben werden wird.

Der Sensor 10 ist ferner mit einem beweglichen Element 18 versehen, das in diesem Beispiel als sich drehende Scheibe oder anderweitiges Drehelement ausgebildet ist. Das Element weist einen Schwingkreis 20 aus einer Induktivität 22 und einer Kapazität 24 auf. Das Element 18 bzw. der Schwingkreis 20 dreht sich in einem elektromagnetischen Gesamtwechselfeld, welches aus der Überlagerung der beiden elektromagnetischen Wechselfelder der beiden Sendeeinheiten 12,14 entsteht. Je nach Drehposition sendet der Schwingkreis 20 ein elektromagnetisches Wechselfeld gleicher Frequenz wie die der Wechselfeder der beiden Sendeeinheiten 12,14 aus, wobei das vom Schwingkreis 20 ausgesendete Wechselfeld zu den beiden anderen Wechselfeldern phasenverschoben ist. Der Grad der Phasenverschiebung stellt ein Maß für die augenblickliche Drehposition des Elements 18 dar. Das Signal des Schwingkreises 20 wird von einer Empfangseinheit 26 in Form einer Empfängerspule empfangen und in einer Auswerteeinheit 28 wird das empfangene Signal verarbeitet, insbesondere wird die Phasenlage dieses Signals relativ zu den Signalen, mit denen die Sendeeinheiten 12,14 versorgt werden, bestimmt.

Die Sendespulen bzw. Sendeeinheiten 12,14 modulieren niederfrequente Schwingungen gleicher Frequenz (z.B. 4 KHz) auf ein für beide Sendespulen identisches hochfrequentes (z.B. 4 MHz) Trägersignal auf. Die modulierten Schwingungen der beiden Sendespulen sind um 90° zueinander phasenverschoben. Beide Sendesignale regen den LC-Schwingkreis 20 an. Die Stärke der Anregung ist proportional zur gekoppelten Induktivität zwischen den jeweiligen Sendespulen und der Schwingkreisspule (Induktivität 22). Je nach Position des beweglichen Elements 18 koppelt jedes Sendesignal unterschiedlich stark in den Schwingkreis 20 ein. Im Schwingkreis 20 entsteht eine modulierte Schwingung, die frequenzgleich zum gesendeten Modulationssignal ist. Die modulierte Schwingung des Schwingkreises 20 hat eine Phasenverschiebung relativ zur gesendeten Modulation, die von dem Amplitudenverhältnis der in den Schwingkreis 20 eingekoppelten Modulationssignale der Sendespulen ist. Das im Schwingkreis entstandene Signal wird, wie oben bereits erwähnt an die Empfangsspule (Empfängereinheit 26) weitergesendet.

Der mathematische Ansatz, der dem Messprinzip zu Grunde liegt, stellt sich wie folgt dar. Bei der Addition zweier sinusförmiger Schwingungen gleicher Frequenz, die 90° zueinander phasenverschoben sind, entsteht eine sinusförmige Schwingung gleicher Frequenz. Die Phasenverschiebung der entstehenden Schwingung ist eine Funktion des Amplitudenverhältnisses der beiden addierten Schwingungen.

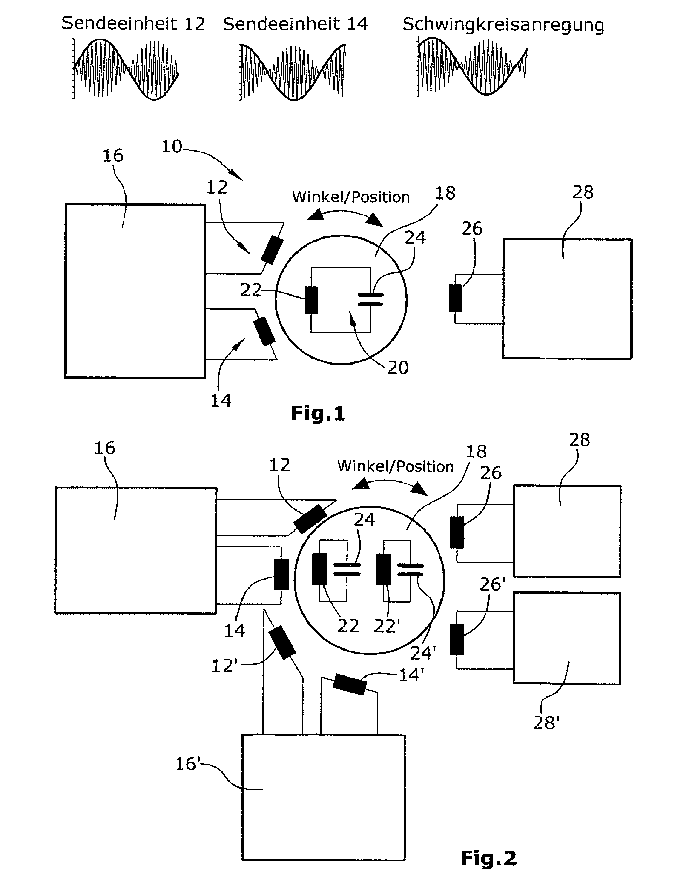

Für viele Anwendungen ist ein zwei- oder mehrkanaliger induktiver Positionssensor erforderlich. Dabei ist die in Fig. 1 dargestellte Anordnung aus den beiden Sendeeinheiten 12,14 mit Auswerteeinheit 16, dem Schwingkreis 20 und der Empfangseinheit 16 mit Auswerteeinheit 28 in Form zweier Subsysteme doppelt bzw. mehrfach vorhanden. Es liegt jedoch nicht zwingend eine Trennung der Subsysteme vor; die Kanäle koppeln im Regelfall ineinander über. Ein Zweikanal-Induktiv-Sensor ist beispielsweise in Fig. 2 gezeigt und z.B. in US-A-2002/0179339 sowie WO-A-2007/D68765 beschrieben.

Die bekannten induktiven Sensoren der zuvor genannten Bauart haben sich in der Praxis grundsätzlich bewährt. Allerdings ist die Stromaufnahme derartiger Sensoren mitunter für einige Anwendungen zu hoch. Außerdem muss, da eingangsseitig nicht mit Sinus- bzw. Kosinussignalen gearbeitet wird, was für die effektive Nutzung des Systems von Vorteil ist, ausgangsseitig ein recht hoher Signalnachbearbeitungsaufwand in Form von Filterungen und dergleichen betrieben werden, was ebenfalls nicht wünschenswert ist und den Flächenbedarf auf einem ASIC erhöht.

Aus US-A-2005/0030010 ist ein induktiver Positionssensor der oben genannten und beschriebenen Art bekannt, bei dem mit einem PWM-Signal als Modulationssignal gearbeitet wird. Auch hierbei ist ein erhöhter Signalnachbearbeitungsaufwand zu betreiben, was die Gesamtanordnung verkompliziert. Für die Filterung des Modulationssignals zwecks Erhalt des Sinus- bzw. Kosinusverlaufs ist ein Tiefpassfilter mit relativ niedriger Grenzfrequenz erforderlich, was zusätzliche Schaltungskomponenten und damit einen erhöhten Flächenbedarf im ASIC erfordert.

Ein für die monolithische Integration vorteilhaftes Verfahren zur Erzeugung der Sendesignale besteht in der Erzeugung von Rechtecksignalen, deren zeitlich gefilterter Verlauf dem gewünschten Signalverlauf des modulierten Sendesignals entspricht. Die Verwendung von Rechtecksignalen ermöglicht einen hohen Wirkungsgrad durch Vermeidung von Verlusten in der integrierten Schaltung. Des weiteren ermöglicht die Erzeugung von Rechtecksignalen eine besonders hohe Linearität des Sensorsignals auf Grund der großen relativen Genauigkeit, mit der Rechtecksignale in integrierten Schaltungen erzeugt werden können. Rechtecksignale können dabei sowohl zur Erzeugung des Trägersignals als auch zur Erzeugung des Modulationssignals verwendet werden.

Ein für die Integration besonders vorteilhaftes Verfahren zur Erzeugung des Modulationssignals besteht dabei entweder in der Verwendung einer pulsdichtemodulierten Folge von trägerfrequenten Rechteckpulsen, deren zeitlich gefilterter Verlauf dem gewünschten Modulationssignal entspricht, oder in einer Abfolge von trägerfrequenten Rechteckpulsen, deren Polarität nach jeder halben Periode der Modulationsfrequenz umgepolt werden. Beide Verfahren eliminieren die Notwendigkeit einer analogen Multiplikation zur Erzeugung des modulierten Signals und ermöglichen daher eine besonders hohe Linearität des Sensorsignals. Die zur Auswertung erforderliche Filterung der erzeugten Rechtecksignale erfolgt dabei vorteilhaft zu einem Teil im Resonanzkreis des bewegbaren Elements, zum anderen Teil im Empfangspfad der integrierten Schaltung.

Wie oben beschrieben, werden induktive Positionssensoren in vielen Anwendungen mehrkanalig ausgeführt. Dabei werden die Subsysteme häufig räumlich eng benachbart ausgeführt. Auf Grund der räumlichen Nähe der Spulen verschiedener Subsysteme und unter Berücksichtigung der weiteren Randbedingungen bei der Ausführung der Spulen (z.B. geeignete Stärke der Koppelungsfaktoren zwischen Sender und Schwingkreis sowie Schwingkreis und Empfänger, möglichst gleiche Induktivität und gleicher Widerstand in beiden Sende-Spulen eines Subsystems, korrekte Winkelabhängigkeit der Koppelungsfaktoren, Unterdrückung des Fernfeldes aller einzelnen Spulen, etc.) ist eine Verkoppelung der Spulen verschiedener Subsysteme untereinander nicht grundsätzlich vermeidbar.

Diese induktive Verkoppelung der Spulen beider Subsysteme (z.B. Sender Kanal 1 mit Empfänger Kanal 2 oder Schwingkreis Kanals 2 mit Empfänger Kanal 1) führt dazu, dass dem Empfänger des einen Subsystems eines mehrkanaligen Sensors Signale des anderen Subsystems zugeführt werden. Wenn diese so eingekoppelten Störsignale des fremden Subsystems im Empfänger nicht hinreichend unterdrückt werden, können sie das gemessene Sensorsignal negativ beeinflussen. So kommt es auf Grund der beschriebenen Nachbarkanalbeeinflussungen insbesondere zu einem verstärkten Rauschen (stochastische Schwankungen) des gemessenen Positionssignals.

Aufgabe der Erfindung ist es, einen induktiven Positionssensor und insbesondere Drehwinkelsensor mit verbesserter Schwingkreisanregung zu schaffen, der verbesserte Funktionseigenschaften aufweist und zuverlässigere Ergebnisse liefert.

Zur Lösung dieser Aufgabe wird mit der Erfindung ein induktiver Positionssensor, insbesondere Drehwinkelsensor, zur Bestimmung der Position eines bewegbaren Elements vorgeschlagen, der versehen ist mit
- zwei ersten Sendeeinheiten zur Erzeugung zweier um im wesentlichen 90° phasenverschobener, ortsabhängiger erster Wechselfelder mit gleicher erster Frequenz,
- zwei zweiten Sendeeinheiten zur Erzeugung zweier um im wesentlichen 90° phasenverschobener, ortsabhängiger zweiter Wechselfelder mit gleicher zweiter Frequenz, die verschieden ist von der ersten Frequenz,
- einem ersten und einem zweiten Schwingkreis, die an oder in einem innerhalb des von den ersten und zweiten Sendeeinheiten erzeugten Gesamtwechselfeld bewegbaren und bezüglich seiner Position zu bestimmenden Element angeordnet sind,
- wobei der erste Schwingkreis von dem von den ersten Sendeeinheiten erzeugten ersten Gesamtwechselfeld anregbar ist und ein erstes Schwingkreis-Wechselfeld mit der ersten Frequenz erzeugt und
- wobei der zweite Schwingkreis von dem von den zweiten Sendeeinheiten erzeugten zweiten Gesamtwechselfeld anregbar ist und ein zweites Schwingkreis-Wechselfeld mit der zweiten Frequenz erzeugt,
- einer ersten Empfangseinheit, die das erste Schwingkreis-Wechselfeld empfängt,
- einer zweiten Empfangseinheit, die das zweite Schwingkreis-Wechselfeld empfängt,
- einer ersten Auswerteeinheit zur Ermittlung der Phasenverschiebung zwischen dem ersten Schwingkreis-Wechselfeld und zumindest einem der beiden ersten Wechselfelder und
- einer zweiten Auswerteeinheit zur Ermittlung der Phasenverschiebung zwischen dem zweiten Schwingkreis-Wechselfeld und zumindest einem der beiden zweiten Wechselfelder,
- wobei die beiden ersten Sendeeinheiten, der erste Schwingkreis, die erste Empfangseinheit und die erste Auswerteeinheit ein erstes Subsystem und die beiden zweiten Sendeeinheiten, der zweite Schwingkreis, die zweite Empfangseinheit und die zweite Auswerteeinheit ein zweites Subsystem bilden,
- wobei die ersten Sendeeinheiten und die zweiten Sendeeinheiten zur abwechselnden Erzeugung der ersten und zweiten Wechselfelder alternierend ansteuerbar sind und
- wobei die Subsysteme, ohne galvanisch verbunden zu sein, derart miteinander gekoppelt sind, dass ein Subsystem erkennt, wenn in einem anderen Subsysteme oder den anderen Subsystemen keine Wechselfelder mehr erzeugt werden.

Ausgangspunkt der Erfindung ist der Aufbau eines induktiven Zwei- bzw. Mehrkanalsensors, wie er beispielhaft in den Fign. 1 und 2 gezeigt ist. Die Erfindung setzt bei der Ansteuerung der Sendeeinheiten beider Kanäle ein, was erfindungsgemäß alternierend erfolgt. Dabei ist ferner erfindungsgemäß vorgesehen, dass die beiden Subsysteme, ohne galvanisch verbunden zu sein, derart miteinander gekoppelt sind, dass das eine Subsystem erkennt, wenn im anderen Subsysteme keine Wechselfelder mehr erzeugt werden.

Die erfindungsgemäße Maßnahme zur Vermeidung der Nachbarkanalbeeinflussungen bei mehrkanaligen Sensorsystemen der beschriebenen Art trotz Verkopplung der Spulen beider Subsysteme besteht im zeitlich abwechselnden Betrieb beider Subsysteme. Diese im folgenden als "AlternatingBurstMode" (ABM) bezeichnete Betriebsart erfordert keine Veränderungen an der Erzeugung der Modulationssignale selbst, und vermeidet daher negative Beeinflussungen wichtiger Systemparameter wie Linearität oder Temperaturdrift. Der ABM erfordert offensichtlich eine Synchronisation der Subsysteme eines mehrkanaligen Systems, so dass jeder Kanal den eigenen Sendebetrieb beginnt, wenn kein anderes Subsysteme sendet.

Diese Synchronisation könnte offensichtlich sehr einfach durch Kommunikation der verschiedenen Subsysteme eines Sensorsystems über eine direkte Verbindung erfolgen.

Bei mehrkanaligen Systemen, bei denen aus Gründen der Redundanz die Subsysteme getrennt ausgeführt sind (einschließlich getrennter integrierter Auswerteschaltungen), verbieten sich direkte galvanische Verbindungen zwischen beiden Auswerteschaltungen häufig auf Grund von Überlegungen zur Systemfunktion bei Ausfall eines Subsystems (Fail-Safe-Betrieb, FMEA). Es muss nämlich sichergestellt werden, dass sich eine Störung in einem der Subsysteme nicht auf ein anderes Subsystem auswirken kann. Dies ist bei einer direkten galvanischen Verbindung beider Systeme nicht auszuschließen. Deshalb wird erfindungsgemäß vorgeschlagen, die Subsysteme ohne galvanische Verbindung miteinander zu koppeln, was vorteilhafterweise kapazitiv, optisch oder induktiv erfolgen kann. Besonders zweckmäßig ist eine induktive Kopplung der Subsysteme, da diese über Induktivitäten in Form der einzelnen Spulen verfügen, die zumindest parasitär gekoppelt sind bzw. deren parasitäre Kopplung zum Zwecke der Kopplung der Subsysteme zwecks Synchronisation der Sendeeinheiten optimiert werden können. Es ist auch möglich, für die induktive Kopplung der Subsysteme separate Induktivitäten vorzusehen, die dann zusätzlich zu den schon vorhandenen Spulen (allgemein Induktivitäten) dieser Subsysteme vorhanden wären.

In vorteilhafter Weiterbildung der Erfindung ist vorgesehen, dass zum Zwecke der Synchronisation der wechselweisen Ansteuerung der Sendeeinheiten entweder die Sendeeinheiten der Subsysteme induktiv gekoppelt sind oder die Sendeeinheiten des einen Subsystems mit der Empfangseinheit eines anderen Subsystems induktiv gekoppelt sind oder der Schwingkreis des einen Subsystems mit der Empfangseinheit bzw. den Sendeeinheiten eines anderen Subsystems induktiv gekoppelt ist.

Alternativ ist es auch möglich, die zwecks Synchronisation des wechselweisen Betriebs der Sendeeinheiten erforderliche Kopplung (vorzugsweise induktive Kopplung) der Subsysteme über die Ansteuereinheiten für die Sendeeinheiten oder die Auswerteeinheiten für die Empfangseinheiten vorzusehen. Zur Realisierung dieser Variante dient beispielsweise ein Transformator, also die Kopplung zweier Induktivitäten, die zusätzlich zu den Induktivitäten der Subsysteme vorzusehen sind.

Zur Vermeidung von Abstrahlungen und zur Vermeidung von Störfeldeinkoppelungen sind die Spulen eines Sensorsystems der beschriebenen Art häufig so ausgeführt, dass sich das magnetische Fernfeld zweier in Reihe geschalteter Teilspulen aufhebt. Häufig ist von diesen beiden Teilspulen nur eine für den eigentlichen Sensorbetrieb aktiv, während die zweite hauptsächlich der Fernfeldkompensation dient. Diese zweite Teilspule unterliegt daher nicht den strikten Anforderungen zur Messgrößenabhängigkeit der Koppelungsfaktoren und ist daher weitgehend frei platzierbar.

Vorteilhaft ist es, wenn nun die Fernfeldkompensationsspulen für die Synchronisation der Sendeeinheiten erfindungsgemäß vorgesehene nicht galvanische Kopplung der Subsysteme verwendet werden.

Die Erfindung sieht also in ihrer allgemeinsten Form einen induktiven Positionssensor, insbesondere Drehwinkelsensor vor, der mehrkanalig ausgeführt ist, also mindestens zwei Subsysteme aus jeweils zwei Sendeeinheiten mit Ansteuereinheit, einem Schwingkreis und einer Empfangseinheit mit Auswerteeinheit aufweist. Die erfindungsgemäße Maßnahme des alternierenden Betriebs der einzelnen Subsysteme und die zur Synchronisation dieses alternierenden Betriebs der Subsysteme vorgesehene nicht galvanische Kopplung der Subsysteme ist insbesondere dann von Vorteil, wenn keine "reinen" Sinussignale zur Ansteuerung der Sendeeinheiten verwendet werden. Das allerdings ist für eine monolithische Realisierung der Ansteuerung der Sendeeinheiten und für die Auswerteeinheiten wiederum von Vorteil. Darüber hinaus hat der alternierende Betrieb der Subsysteme den Vorteil der Reduktion des Energieverbrauchs, was durchaus in Abhängigkeit vom Einsatz des induktiven Positionssensors wünschenswert sein kann.

Die Erzeugung der Wechselfelder durch die Sendeeinheiten erfolgt also zweckmäßigerweise durch ein im wesentlichen sinusförmiges Signal, das vorzugsweise durch Amplitudenmodulation eines im wesentlichen sinusförmigen Trägersignals erzeugbar ist. Hierdurch kann ein vergleichsweise niederfrequentes sinusförmiges Signal von beispielsweise 4 KHz unter Verwendung von Induktivitäten im nh- µh-Bereich erzeugt werden, indem diese Induktivitäten durch ein vergleichsweise hochfrequentes Trägersignal von beispielsweise 4 MHz angeregt wird, und eine Amplitudenmodulation erfolgt. Das Trägersignal kann dabei zweckmäßigerweise durch Anlegen einer Rechteckwechselspannung erzeugt werden, deren Wiederholfrequenz gleich der Trägerfrequenz ist, während das Modulationssignal ein Pulsdichtesignal mit einer sich über die Zeit verändernden Impulsdichte zur Erzeugung eines im wesentlichen eine Sinus- bzw. Kosinusform aufweisenden Signalverlaufs ist, wobei das Rechteckwechselsignal jeweils für die Dauer der Pulse des Pulsdichtesignals an den ersten Sendeeinheiten anliegt. Eine derartige Erzeugung sinusförmiger Signalverläufe ist beispielsweise WO-A-2007/068765 beschrieben.

Die Erfindung wird nachfolgend anhand verschiedener Ausführungsbeispiele und unter Bezugnahme auf die Zeichnung näher erläutert. Im einzelnen zeigen dabei:
- Fig. 1: das Grundprinzip eines einkanaligen induktiven Positionssensors,
- Fig. 2: das Grundprinzip eines zweikanaligen induktiven Positionssensors,
- Fig. 3: ein erstes Ausführungsbeispiel eines induktiven Positionssensors mit einer ersten Möglichkeit der induktiven Kopplung zweier Subsysteme des Sensors,
- Fig. 4: ein weiteres Ausführungsbeispiel eines induktiven Positionssensors mit induktiver Kopplung der Subsysteme und
- Fig. 5: ein letztes Ausführungsbeispiel eines induktiven Positionssensors mit induktiver Kopplung der Subsysteme.

In den Fign. 1 und 2 sind ein ein- und ein zweikanaliger induktiver Positionssensor 10 nach dem Stand der Technik gezeigt. Bezüglich der Beschreibung dieser beiden Figuren wird auf die Beschreibungseinleitung verwiesen.

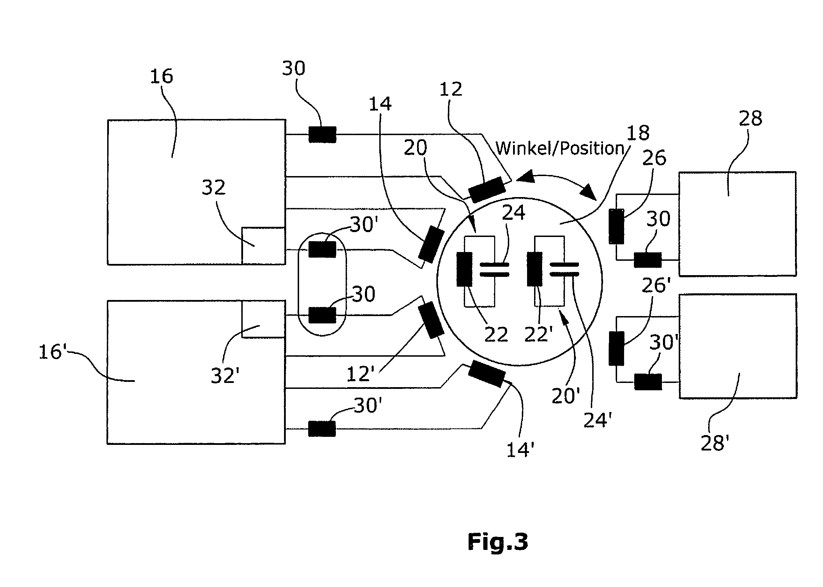

Fig. 3 zeigt ein erstes Ausführungsbeispiel eines induktiven Positionssensors 10', der im wesentlichen den gleichen Aufbau wie der Positionssensor gemäß Fig. 2 aufweist. Im Unterschied zum Positionssensor gemäß Fig. 2 wird beim induktiven Positionssensor 10' gemäß Fig. 3 eine induktive Kopplung zwischen den Subsystemen erzeugt bzw. eine parasitäre induktive Kopplung zwischen den Subsystemen ausgenutzt, um die Subsysteme zum Zwecke eines alternierenden Betriebs zu synchronisieren, ohne dass dazu eine galvanische Verbindung zwischen den Subsystemen erforderlich ist. Im Ausführungsbeispiel gemäß Fig. 3 werden für diese induktive Kopplung die Fernfeldkompensationsspulen 30 jeweils einer Sendeeinheiten 12,14 bzw. 12',14' der beiden Subsysteme verwendet. An dieser Stelle sei der Vollständigkeit halber noch erwähnt, dass die Ansteuereinheit und die Auswerteeinheit jedes Subsystems in einem gemeinsamen IC realisiert sind.

Ein bei den hier zu beschreibenden Ausführungsbeispielen genutztes Verfahren zur Synchronisation der Subsysteme eines mehrkanaligen Sensorsystems der zuvor beschriebenen Art zum Zweck des Betriebs im AlternatingBurstMode, das zur Integration in eine integrierten Schaltung besonders geeignet ist, besteht in der Überwachung der induzierten Signale in einer oder mehreren Spulen eines Subsystems zum Zweck der Erkennung des Sendebetriebs eines anderen Subsystems des gleichen Sensorsystems.

Während des Sendebetriebs eines ersten Subsystems sollen alle anderen Subsysteme zur Vermeidung von Nachbarkanalbeeinflussungen nicht senden. Die aktiven Auswerteschaltungen dieser anderen Subsysteme können also während dieser Zeit alle jeweils angeschlossenen Spulen (beide Sendespulen und die Empfangsspule) auf eingekoppelte Signale aus dem sendenden ersten Subsystem jeweils durch eine jedem Subsystem zugeordnete Überwachungsschaltung 32 überwachen und mit dem eigenen Sendebetrieb erst dann beginnen, wenn keine Einkoppelungen eines anderen Subsystems mehr detektierbar sind. Die erfindungsgemäße Überwachung ist dabei insbesondere nicht auf die Empfangsspule beschränkt, sondern kann je nach Systembeschaffenheit eine geeignete Auswahl der Systemspulen des Subsystems betreffen. Durch diese Überwachung ist der zur Vermeidung von Nachbarkanalbeeinflussungen erforderliche abwechselnde (d.h. sich nicht überlagernde) Betrieb im Alternating BurstMode gewährleistet. Das Verfahren erfordert weder direkte Verbindungen noch Verbindungen über Kondensatoren oder Widerstände zwischen den Subsystemen, sondern verwendet die häufig ohnehin gegebene induktive Kopplung zwischen den Spulen der verschiedenen Subsysteme untereinander und eignet sich daher aus den genannten Gründen besonders für Systeme mit hohen Sicherheitsanforderungen.

Dieses Verhalten ist besonders vorteilhaft bei der Integration in einer integrierten Auswerteschaltung, da keine zusätzlichen Außenanschlüsse (pins) zur Realisierung erforderlich sind. Des weiteren ist die Umschaltung der Spulen vom Sender auf die angesprochene Überwachungsschaltung und zurück in einer integrierten Schaltung ohne großen Mehraufwand möglich.

Bei dem Ausführungsbeispiel der Fig. 3 werden die häufig vorhandenen induktiven Koppelungen zwischen den Spulen verschiedener Subsysteme (z.B. Sendespulen Subsystem 1 zu Sendespulen Subsystem 2 oder Schwingkreis System 1 zu Empfangsspulen System 2) zur Erkennung des Sendebetriebs in einem anderen Subsystem genutzt. Eine Möglichkeit zur gezielten Vergrößerung solcher Koppelungen ohne negative Beeinflussung des übrigen Spulensystems besteht in der Koppelung zwischen den häufig ohnehin erforderlichen Fernfeldkompensationsspulen 30.

Die Ausführung der Spulenanordnung des induktiven Positionssensors 10' nach Fig. 3 nutzt diese Fernfeldkompensationsspulen 30,30' und insbesondere die Freiheitsgrade bei der Gestaltung und Platzierung derselben zur Herbeiführung einer induktiven Koppelung (der Spulen) unterschiedlicher Subsysteme. Im Ausführungsbeispiel gemäß Fig. 3 detektiert also die Überwachungsschaltung 32 die in die Fernfeldkompensationsspule 30 der Sendeeinheiten 14 und 12 des einen Subsystems induzierten Sendesignale der Sendeeinheiten 14' und 12' des anderen Subsystems.

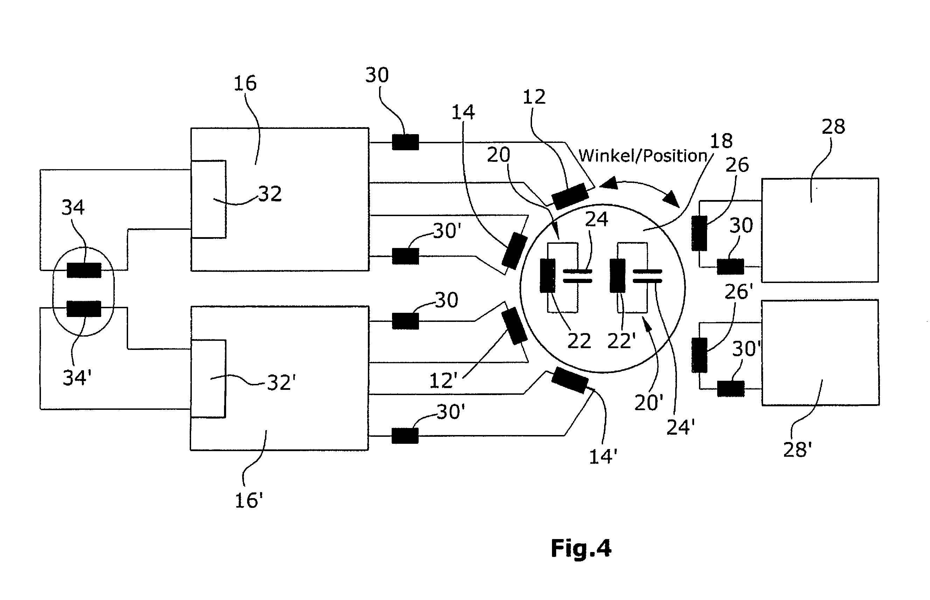

Bei dem Ausführungsbeispiel des Positionssensors 10" der Fig. 4 erfolgt die induktive Kopplung der beiden Subsysteme durch zwei speziell für diesen Zweck vorgesehene zusätzliche Induktivitäten 34,34', deren eingekoppelten Signale von den Überwachungsschaltungen 32 detektiert werden.

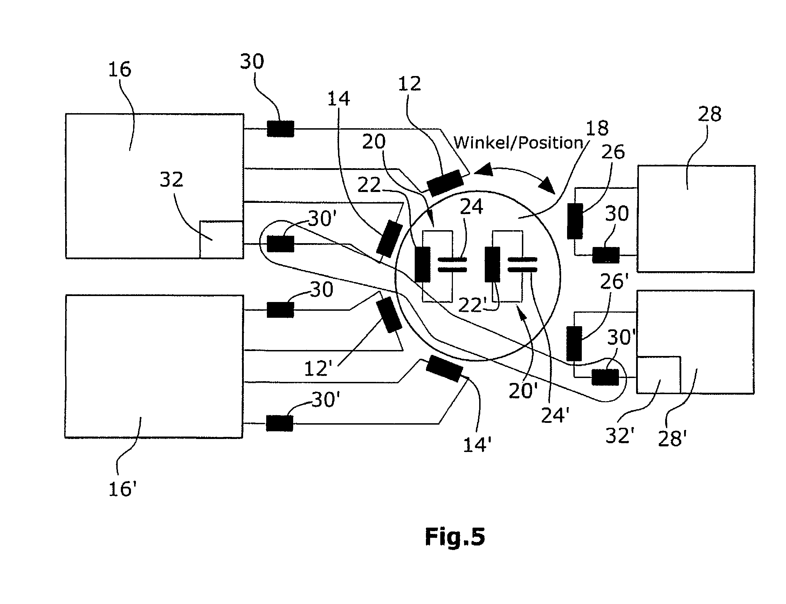

Im Ausführungsbeispiel des induktiven Positionssensors 10"' gemäß Fig. 5 erfolgt die induktive Kopplung beider Subsysteme wiederum durch die Ausnutzung der ohnehin vorhandenen Feldkompensationsspulen 30,30', und zwar in diesem Fall der Feldkompensationsspule 30 der Sendeeinheit 14 des einen Subsystems und der Feldkompensationsspule 30,30' der Empfangseinheit 26' des anderen Subsystems.

## Patentansprüche

1. Induktiver Positionssensor, insbesondere Drehwinkelsensor, zur Bestimmung der Position eines bewegbaren Elements, mit
- zwei ersten Sendeeinheiten (12,14) zur Erzeugung zweier um im wesentlichen 90° phasenverschobener, ortsabhängiger erster Wechselfelder mit gleicher erster Frequenz,
- zwei zweiten Sendeeinheiten (12',14') zur Erzeugung zweier um im wesentlichen 90° phasenverschobener, ortsabhängiger zweiter Wechselfelder mit gleicher zweiter Frequenz, die verschieden ist von der ersten Frequenz,
- einem ersten und einem zweiten Schwingkreis (20,20'), die an oder in einem innerhalb des von den ersten und zweiten Sendeeinheiten (12,14,12',14') erzeugten Gesamtwechselfeld bewegbaren und bezüglich seiner Position zu bestimmenden Element angeordnet sind,
- wobei der erste Schwingkreis (20) von dem von den ersten Sendeeinheiten (12,14) erzeugten ersten Gesamtwechselfeld anregbar ist und ein erstes Schwingkreis-Wechselfeld mit der ersten Frequenz erzeugt und
- wobei der zweite Schwingkreis (20') von dem von den zweiten Sendeeinheiten (12',14') erzeugten zweiten Gesamtwechselfeld anregbar ist und ein zweites Schwingkreis-Wechselfeld mit der zweiten Frequenz erzeugt,
- einer ersten Empfangseinheit (26), die das erste Schwingkreis-Wechselfeld empfängt,
- einer zweiten Empfangseinheit (26'), die das zweite Schwingkreis-Wechselfeld empfängt,
- einer ersten Auswerteeinheit (28) zur Ermittlung der Phasenverschiebung zwischen dem ersten Schwingkreis-Wechselfeld und zumindest einem der beiden ersten Wechselfelder und
- einer zweiten Auswerteeinheit (28') zur Ermittlung der Phasenverschiebung zwischen dem zweiten Schwingkreis-Wechselfeld und zumindest einem der beiden zweiten Wechselfelder,
- wobei die beiden ersten Sendeeinheiten (12,14), der erste Schwingkreis (20), die erste Empfangseinheit (26) und die erste Auswerteeinheit (28) ein erstes Subsystem und die beiden zweiten Sendeeinheiten (12',14'), der zweite Schwingkreis (20'), die zweite Empfangseinheit (26') und die zweite Auswerteeinheit (28') ein zweites Subsystem bilden,
**dadurch gekennzeichnet,**
- **dass** die ersten Sendeeinheiten (12,14) und die zweiten Sendeeinheiten (12',14') zur abwechselnden Erzeugung der ersten und zweiten Wechselfelder alternierend ansteuerbar sind und
- **dass** die beiden Subsysteme, ohne galvanisch verbunden zu sein, derart miteinander gekoppelt sind, dass ein Subsystem erkennt, wenn in einem anderen Subsystem oder den anderen Subsystemen keine Wechselfelder mehr erzeugt werden.

2. Induktiver Positionssensor nach Anspruch 1, **dadurch gekennzeichnet, dass** die beiden Subsysteme kapazitiv, optisch oder induktiv gekoppelt sind.

3. Induktiver Positionssensor nach Anspruch 1 oder 2, **dadurch gekennzeichnet, dass** die beiden Subsysteme induktiv gekoppelt sind und dass jedem Subsystem eine bei Betrieb des Subsystems anregbare Induktivität zugeordnet ist, die miteinander gekoppelt sind.

4. Induktiver Positionssensor nach Anspruch 3, **dadurch gekennzeichnet, dass** die Induktivitäten Bestandteil der Subsysteme und für deren Funktion vorgesehen sind.

5. Induktiver Positionssensor nach Anspruch 4, **dadurch gekennzeichnet, dass** die ersten und zweiten Sendeeinheiten (12,14,12',14'), die ersten und zweiten Schwingkreise (20,20') und die ersten und zweiten Empfangseinheiten (26,26') jeweils mindestens eine Induktivität aufweisen und dass eine der Induktivitäten des ersten Subsystems mit einer der Induktivitäten des zweiten Subsystems gekoppelt ist.

6. Induktiver Positionssensor nach einem der Ansprüche 1 bis 4, **dadurch gekennzeichnet, dass** eine erste Ansteuereinheit (16) für die ersten Sendeeinheiten (12,14) mit einer zweiten Ansteuereinheit (16') für die zweiten Sendeeinheiten (12',14') gekoppelt ist, ohne dass die beiden Ansteuereinheiten (16,16') für die ersten und zweiten Sendeeinheiten (12,14,12',14') oder die beiden Auswerteeinheiten (28,28') der beiden Empfangseinheiten galvanisch miteinander verbunden sind oder dass die Ansteuereinheit (16,16') dieses Subsystems mit der Auswerteeinheit (28,28') eines anderen Subsystems galvanisch verbunden ist.

7. Induktiver Positionssensor nach einem der Ansprüche 1 bis 6, **dadurch gekennzeichnet, dass** die ersten und die zweiten Sendeeinheiten (12,14,12',14') erste bzw. zweite Sendespulen aufweisen und dass eine der ersten Sendespulen mit einer der zweiten Sendespulen induktiv gekoppelt ist.

8. Induktiver Positionssensor nach einem der Ansprüche 1 bis 6, **dadurch gekennzeichnet, dass** die ersten und die zweiten Sendeeinheiten (12,14,12',14') Sendespulen und die ersten und zweiten Empfangseinheiten (26,26') Empfangsspulen aufweisen, wobei zur Vermeidung von Störfeldeinkopplungen zu jeder Sendespule bzw. jeder Empfangsspule eine Fernfeldkompensationsspule (30) derart in Reihe geschaltet ist, dass sich das magnetische Fernfeld beider in Reihe liegender Spulen im wesentlichen aufhebt, und dass die Fernfeldkompensationsspule (30) zumindest einer der ersten Sendespulen oder der ersten Empfangsspulen eines Subsystems mit der Fernfeldkompensationsspule (30) zumindest einer der zweiten Sendespulen oder der zweiten Empfangsspulen eines anderen Subsystems induktiv gekoppelt ist.

9. Induktiver Positionssensor nach einem der Ansprüche 1 bis 8, **dadurch gekennzeichnet, dass** den Sendeeinheiten (12,14,12',14') zur Erzeugung der Wechselfelder jeweils ein im wesentlichen sinusförmiges Signal zuführbar ist.

10. Induktiver Positionssensor nach Anspruch 9, **dadurch gekennzeichnet, dass** das sinusförmige Signal durch Amplitudenmodulation eines im wesentlichen sinusförmigen Trägersignals erzeugbar ist.

## Claims

1. An inductive position sensor, particularly a rotational-angle sensor, for determining the position of a movable element, said sensor comprising
- two first transmitter units (12,14) for generating two site-dependent first alternating fields having an identical first frequency, said first alternating fields being phase-shifted relative to each other by substantially 90°,
- two second transmitter units (12',14') for generating two site-dependent second alternating fields having an identical second frequency differing from said first frequency, said second alternating fields being phase-shifted relative to each other by substantially 90°,
- a first and a second oscillating circuit (20,20') arranged on or in an element which is movable within the total alternating field generated by said first and second oscillating circuits (12,14,12',14') and the position of which is to be determined,
- said first oscillating circuit (20) being adapted to be energized by the first total alternating field generated by said first transmitter units (12,14) and to generate a first oscillating-circuit alternating field having said first frequency, and
- said second oscillating circuit (20') being adapted to be energized by the second total alternating field generated by said second transmitter units (12'14') and to generate a second oscillating-circuit alternating field having said second frequency,
- a first receiver unit (26) receiving said first oscillating-circuit alternating field,
- a second receiver unit (26') receiving said second oscillating-circuit alternating field,
- a first evaluating unit (28) for determining the phase shift between said first oscillating-circuit alternating field and at least one of said two first alternating fields, and
- a second evaluating unit (28') for determining the phase shift between said second oscillating-circuit alternating field and at least one of said two second alternating fields,
- said two first transmitter units (12,14), said first oscillating circuit (20), said first receiver unit (26) and said first evaluating unit (28) forming a first subsystem, and said two second transmitter units (12',14'), said second oscillating circuit (20'), said second receiver unit (26') and said second evaluating unit (28') forming a second subsystem,
**characterized in**
- **that** said first transmitter units (12,14) and said second transmitter units (12',14') are alternately controllable to alternately generate said first and second alternating fields, and
- **that** said two subsystems, without being galvanically connected to each other, are coupled to each other in such a manner that one said subsystem is adapted to detect when no alternating fields are generated anymore in another subsystem or in the other subsystems.

2. The inductive position sensor according to claim 1, **characterized in that** said two subsystems are coupled to each other in a capacitive, optical or inductive manner.

3. The inductive position sensor according to claim 1 or 2, **characterized in that** said two subsystems are inductively coupled to each other and that, to each subsystem, an inductance is assigned which can be excited during operation of the subsystem, said inductances being coupled to each other.

4. The inductive position sensor according to claim 3, **characterized in that** said inductances are components of the subsystems and are provided for the function of the subsystems.

5. The inductive position sensor according to claim 4, **characterized in that** said first and second transmitter units (12,14,12',14'), said first and second oscillating circuits (20,20') and said first and second receiver units (26,26') each comprise at least one inductance and that one of the inductances of the first subsystem is coupled to one of the inductances of the second subsystem.

6. The inductive position sensor according to any one of claims 1 to 4, **characterized in that** a first control unit (16) for the first transmitter units (12,14) is coupled to a second control unit (16') for the second transmitter units (12',14'), without said two control units (16,16') for the first and second transmitter units (12,14,12',14') or said two evaluation units (28,28') of the two receiver units being galvanically connected to each other or the control unit (16,16') of this subsystem being galvanically connected to the evaluation unit (28,28') of another subsystem.

7. The inductive position sensor according to any one of claims 1 to 6, **characterized in that** said first and second transmitter units (12,14, 12',14') comprise first and respectively second transmitter coils and that one of said first transmitter coils is inductively coupled to one of said second transmitter coils.

8. The inductive position sensor according to any one of claims 1 to 6, **characterized in that** said first and second transmitter units (12,14, 12',14') comprise transmitter coils and said first and second receiver units (26,26') comprise receiver coils, wherein, for avoidance of an incoupling of interference fields, a far-field compensation coil (30) is connected in parallel to each transmitter coil and respectively each receiver coil in such a manner that the magnetic far field of the two serially arranged coils substantially eliminates itself, and that the far-field compensation coil (30) of at least one of said first transmitter coils or of said first receiver coils of a subsystem is inductively coupled to the far-field compensation coil (30) of at least one of the second transmitter coils or the second receiver coils of another subsystem.

9. The inductive position sensor according to any one of claims 1 to 8, **characterized in that**, for generating said alternate fields, a respective substantially sinusoidal signal can be supplied to said transmitter units (12,14,12',14').

10. The inductive position sensor according to claim 9, **characterized in that** said sinusoidal signal can be generated by amplitude modulation of a substantially sinusoidal carrier signal.

## Revendications

1. Capteur de position inductif, notamment capteur d'angle de rotation, pour déterminer la position d'un élément mobile, comprenant
deux premières unités d'émission (12, 14) pour engendrer deux premiers champs alternatifs de même première fréquence, décalés l'un par rapport à l'autre sensiblement de 90° et dépendant de la position,
deux deuxièmes unités d'émission (12', 14') pour engendrer deux deuxièmes champs alternatifs de même deuxième fréquence qui est différente de la première fréquence, décalés l'un par rapport à l'autre sensiblement de 90° et dépendant de la position,
un premier et un deuxième circuits résonnants (20, 20') qui sont disposés sur ou dans un élément qui est déplaçable à l'intérieur du champ alternatif total engendré par les premières et deuxièmes unités d'émission (12, 14, 12', 14') et qui doit être déterminé en ce qui concerne sa position,
le premier circuit résonnant (20) étant apte à être excité par le champ alternatif total engendré par les premières unités d'émission (12, 14) et engendrant un premier champ alternatif de circuit résonnant d'une première fréquence et
le deuxième circuit résonnant (20') étant apte à être excité par le champ alternatif total engendré par les deuxièmes unités d'émission (12', 14') et engendrant un deuxième champ alternatif de circuit résonnant d'une deuxième fréquence,
une première unité de réception (26), qui reçoit le premier champ alternatif de circuit résonnant,
une deuxième unité de réception (26'), qui reçoit le deuxième champ alternatif de circuit résonnant,
une première unité d'exploitation (28) pour déterminer le décalage de phase entre le premier champ alternatif de circuit résonnant et au moins un des premiers champs alternatifs et
une deuxième unité d'exploitation (28') pour déterminer le décalage de phase entre le deuxième champ alternatif de circuit résonnant et au moins un des deuxièmes champs alternatifs,
les deux premières unités d'émission (12, 14), le premier circuit résonnant (20), la première unité de réception (26) et la première unité d'exploitation (28) formant un premier sous-système et les deux deuxièmes unités d'émission (12', 14'), le deuxième circuit résonnant (20'), la deuxième unité de réception (26') et la deuxième unité d'exploitation (28') formant un deuxième sous-système,
**caractérisé en ce que**
les premières unités d'émission (12, 14) et les deuxièmes unités d'émission (12', 14') sont aptes à être commandées alternativement pour engendrer alternativement les premiers et les deuxièmes champs alternatifs et
**en ce que** les deux sous-systèmes, sans être couplés de manière galvanique, sont reliés l'un à l'autre de manière telle qu'un sous-système reconnaît qu'aucun champ alternatif n'est plus engendré dans un autre sous-système ou dans les autres sous-systèmes.

2. Capteur de position inductif selon la revendication 1, **caractérisé en ce que** les deux sous-systèmes sont couplés de manière capacitive, optique ou inductive.

3. Capteur de position inductif selon la revendication 1 ou 2, **caractérisé en ce que** les deux sous-systèmes sont couplés de manière inductive et **en ce qu'**à chaque sous-système est attribuée une inductance apte à être excitée lors d'un fonctionnement du sous-système, les deux inductances étant couplées l'une à l'autre.

4. Capteur de position inductif selon la revendication 3, **caractérisé en ce que** les inductances font partie des sous-systèmes et sont prévues pour leur fonctionnement.

5. Capteur de position inductif selon la revendication 4, **caractérisé en ce que** les premières et deuxièmes unités d'émission (12, 14, 12', 14'), les premiers et deuxièmes circuits de résonnance (20, 20') et les premières et deuxièmes unités de réception (26, 26') comprennent chacun au moins une inductance et **en ce que** l'une des inductances du premier sous-système est couplée à une des inductances du deuxième sous-système.

6. Capteur de position inductif selon l'une des revendications 1 à 4, **caractérisé en ce qu'**une première unité de commande (16) pour les premières unités d'émission (12, 14) est couplée à une deuxième unité de commande (16') pour les deuxièmes unités d'émission (12', 14') sans que les deux unités de commande (16, 16') pour les premières et les deuxièmes unités d'émission (12, 14, 12', 14') ni les deux unités d'exploitation (28, 28') des deux unités de réception ne soient couplées l'une à l'autre de manière galvanique ni que les unités de commande (16, 16') de ce sous-système ne soit couplé à l'unité d'exploitation (28, 28') d'un autre sous-système de manière galvanique.

7. Capteur de position inductif selon l'une des revendications 1 à 6, **caractérisé en ce que** les premières et deuxièmes unités d'émission (12, 14, 12', 14') comprennent respectivement des premières ou deuxièmes bobines d'émission et **en ce qu'**une des premières bobines d'émission est couplée de manière inductive à une des deuxièmes bobines d'émission.

8. Capteur de position inductif selon l'une des revendications 1 à 6, **caractérisé en ce que** les premières et les deuxièmes unités d'émission (12, 14, 12', 14') comprennent des bobines d'émission et **en ce que** les premières et les deuxièmes unités de réception (26, 26') comprennent des bobines de réception, une bobine de compensation de champ lointain (30) étant branchée en série respectivement avec chaque bobine d'émission ou chaque bobine de réception de façon que les champs lointains magnétiques des deux bobines en série se neutralisent essentiellement et **en ce que** la bobine de compensation de champ lointain (30) d'au moins une des premières bobines d'émission ou des premières bobines de réception d'un sous-système est couplée de manière inductive avec la bobine de compensation de champ lointain (30) d'au moins une des deuxièmes bobines d'émission ou des deuxièmes bobines de réception d'un autre sous-système.

9. Capteur de position inductif selon l'une des revendications 1 à 8, **caractérisé en ce que**, pour engendrer les champs alternatifs, un signal essentiellement sinusoïdal peut être acheminé à chacune des unités d'émission (12, 14, 12', 14').

10. Capteur de position inductif selon la revendication 9, **caractérisé en ce que** le signal sinusoïdal peut être formé par modulation d'amplitude d'un signal de porteuse sensiblement sinusoïdal.
